# EUROPEAN PATENT APPLICATION

(11) **EP 4 195 590 A1**
(43) Date of publication of application: **14.06.2023**
(21) Application number: 21383132.4
(22) Date of filing: 13.12.2021
(51) Int. Cl.: H04L 9/40, H04W 4/70

(54) **SECURE DATA TRANSMISSION**

(71) Applicant: Giesecke+Devrient Mobile Security GmbH, 81677 München (DE)
(72) Inventor: ARBÓS, Noemi, 08820 El Prat Llobregat (ES); JOSHI, Mukesh, 08006 Barcelona (ES); GARCIA, Luis Domingo, 08820 El Prat Llobregat (ES)
(74) Representative: Giesecke + Devrient IP

(57) **Abstract**

The present invention relates to a method for securely transmitting data from an loT device 101 to an application server 102 via a telecommunication network, wherein a re-encryption server 103 decrypts S111 data encrypted by the loT device 101 and re-encrypts S112 the decrypted data by an encryption key of the application server 102 in such a way that the application server 102 can obtain the data by decrypting the re-encrypted data. The invention further relates to a re-encryption server 103 configured to enable secure transmission of data from an loT device 101 to an application server 102 via a telecommunication network, wherein the re-encryption server 103 comprises a cryptography means configured to decrypt data encrypted by the loT device and to re-encrypt the decrypted data by an encryption key of the application server 102 in such a way that the application server 102 can obtain the data by decrypting the re-encrypted data. Moreover, the invention relates to a system 100 configured for secure transmission of data from an loT device 101 to an application server 102 via a telecommunication network, wherein the system 100 comprises the loT device 101 configured to encrypt the data, a re-encryption server 103 configured to re-encrypt the data encrypted by the loT device 101 and the application server 102 configured to decrypt data re-encrypted by the re-encryption server 103.

## Description

The present invention relates to a method for securely transmitting data from an loT device to an application server via a telecommunication network, a re-encryption server configured to enable the method and a system comprising said the re-encryption server.

### BACKGROUND OF THE INVENTION

Nowadays, loT (Internet of Things) devices are increasingly used in industry, commerce and in people's daily lives. An loT device, basically, is a physical object or a group of such objects equipped with sensors, data processing capabilities, executable software, and other technologies, so as to connect the device to a data communication network such as the Internet and to exchange data with other loT devices so as to conduct transactions related to for example software execution, data retrieval, e-commerce, object rental, another electronically conducted service or the like.

Depending on the transaction conducted, loT devices are usually at least temporarily connected to specific application servers of a service provider that support the respective transaction. In this regard it is known to cryptographically end-to-end protect data transmitted between an loT device and an application server. In such a scenario, data encrypted by a cryptographic encryption key of the loT device is decrypted by the application server by means of a corresponding decryption key. Consequently, the security of the loT infrastructure essentially depends on the protection level of the decryption key on the application server and the trustworthiness of the application server and service provider. That is, if the decryption key is stolen by an attacker of the application server, for example when the application server is hacked, the loT device's encryption key and any protected data communication with other parties is corrupted as well.

It is therefore desirable to provide a solution to the above-outlined technical problems and improve the security of data communication between loT devices and application servers.

### SUMMARY OF THE INVENTION

The present invention addresses the above object by the subject-matter covered by the independent claims. Preferred embodiments of the invention are defined in the dependent claims.

According to a first aspect of the present invention, there is provided a method for securely transmitting data from an loT device to an application server via a telecommunication network by means of a re-encryption server. In a first step, the re-encryption server receives encrypted data from the loT device and decrypts that data with an appropriate decryption key. In a second step, the re-encryption server re-encrypts the decrypted data with an encryption key of the application server so that the application server can obtain the data by decrypting the re-encrypted data.

According to the invention, the data to be transmitted from the loT device to the application server is initially encrypted by the loT device with an encryption key and then transmitted to the re-encryption server, either directly or via the application server. The re-encryption server receives the encrypted data and decrypts it with a decryption key corresponding to the encryption key of the loT device and thereby obtains the unencrypted clear data intended for the application server. The re-encryption server then re-encrypts the data with an encryption key of the application server and transmits it to the application server. The application server receives the encrypted data and decrypts it with a decryption key corresponding to the encryption key used by the re-encryption server to thereby obtain the unencrypted clear data from the loT device.

Since, according to the invention, the re-encryption server is, other than the application server, a trusted intermediary entity operated by a trustworthy party, the invention enables a cryptographically secured data communication between the loT device and the application server without the necessity to provide the loT device's decryption keys to the application server. The lack of trustworthiness of the application server is thus compensated by the trustworthiness of the intermediary re-encryption server. The invention improves the security of the communication between the loT device and the application server because even if the application server is hacked, any cryptographic keys captured by the attacker will not compromise the loT device and its protected communication with other entities.

According to a preferred embodiment, the loT device encrypts the data with an encryption session key that corresponds to a decryption session key used by the re-encryption server to decrypt the encrypted data of the loT device. Further, the application server decrypts the encrypted data received from the re-encryption server with a decryption key corresponding to the encryption key used by the re-encryption server, thereby obtaining the data from the loT device.

According to this embodiment, the loT device encrypts the data with an encryption session key, while the re-encryption server decrypts the so encrypted data with a corresponding decryption session key, the two session keys being symmetric keys. Further, the re-encryption server re-encrypts the decrypted data with an encryption key, while the application server decrypts the so encrypted data with a corresponding decryption key, there two keys being symmetric keys as well. Alternatively, the latter key pair can also be asymmetrical, in which case the encryption key used by the re-encryption server is a public key corresponding to the application server's private decryption key.

According to some embodiments of the invention, the loT device generates a reference code by means of the encryption session key while the re-encryption server generates a comparison code by means of the decryption session key. By means of the two codes, the re-encryption server authenticates the data encrypted by the loT device if the reference code and the comparison code correspond to each other. If the reference and comparison codes correspond to each other, for instance in that they are identical or one can be uniquely derived from the other, the re-encryption server determines that the encrypted data in fact originated from the loT device and not, for instance, from an attacking third party. If the two codes do not correspond to each other, the re-encryption server may refuse to process the encrypted data and/or request a valid reference code from the loT device.

According to some embodiments of the invention, the encryption session key used by the loT device is derived from an encryption key used by the loT device and/or the decryption session key used by the re-encryption server is derived from a decryption key used by the re-encryption server. Particularly, the encryption session key is preferably derived from an encryption key stored in the loT device by means of an algorithm implemented on the loT device that receives the encryption key as an input and outputs a non-random encryption session key. Correspondingly, as according to this embodiment the encryption key of the loT device corresponds to the decryption key of the re-encryption server, the decryption session key is preferably derived from that decryption key so that the encryption session key and the decryption session key correspond to each other.

This preferred embodiment allows the owner of the loT device easily to change from the current application server to a new application server, since the decryption key corresponding to the encryption key used in the loT device does not need to be firstly removed from the current application server and then be added to the new application server any more. This simplifies the process of changing the application server, which leads to a reduction of cost.

According to an alternative embodiment of the invention, instead of using the encryption session key and decryption key as described above, an encryption key of the loT device may be directly used to encrypt the data on the side of the loT device. Accordingly, a decryption key corresponding to the encryption key is may be used by the re-encryption server to decrypt the encrypted data received from the loT device. According to the alternative, the application server decrypts the data re-encrypted by the re-encryption server with a decryption key corresponding to the encryption key used by the re-encryption server to re-encrypt the data, thereby obtaining the data from the loT device.

Preferably, according to the alternative embodiment, the loT device generates a reference code by means of a session key and the re-encryption server generates a comparison code by means of a corresponding session key. By means of those two codes, the re-encryption server authenticates the data encrypted by the loT device if the reference code and the comparison code correspond to each other. If the reference and comparison codes correspond to each other, for instance in that they are identical or one can be uniquely derived from the other, the re-encryption server determines that the encrypted data in fact originated from the loT device and not, for instance, from an attacking third party. If the two codes do not correspond to each other, the re-encryption server may refuse to process the encrypted data and/or request a valid reference code from the loT device.

Preferably, according to the alternative embodiment, the session key used to generate the reference code may be derived from the encryption key used by the loT device to encrypt the data. Further, the session key used to generate the comparison code may be derived from the decryption key used by the re-encryption server to decrypt the encrypted data.

As regards the alternative embodiment, further steps, for example relating to the processes of re-encryption and decryption re-encrypted data, correspond to similar steps disclosed in view of previously disclosed embodiments.

According to some embodiments of the present invention, the application server generates a comparison code by means of the decryption key that the application server uses to decrypt the re-encrypted data received from the re-encryption server. The re-encryption server, in turn, generates a reference code by means of the encryption key used to re-encrypt the data.

That is, the re-encryption server first generates a reference code by using its encryption key and transmits the reference code to the application server. Correspondingly, the application server generates a comparison code by using its decryption key and then compares the generated comparison code with the received reference code in order to authenticate re-encrypted data received from the re-encryption server.

Alternatively, the reference code may be generated by using an encryption session key derived from the re-encryptions server's encryption key while the comparison code may be generated by using a decryption session key derived from the applications server's decryption key. Preferably, the application server authenticates the data re-encrypted by the re-encryption server, if the reference code and the comparison code correspond to each other. If the two codes correspond to each other, the re-encrypted data is proven to stem from the re-encryption server. In general, this process is comparable to the processes of generating a reference code on the loT device and a comparison code on the re-encryption server to authenticate the encrypted date transferred from the loT device to the re-encryption server, as described above.

According to some embodiments of the present invention, the reference code and/or the comparison codes are CMAC codes. That is, either of the two reference codes generated by the loT device and by the re-encryption server may be a CMAC code. Likewise, either of the two comparison codes generated by the re-encryption server and the application server may be a CMAC code as well. The CMAC code is a (block) cypher-based message authentication code, where the data encrypted by the loT device and/or the re-encryption server are "messages" in the sense of the CMAC generation process.

According to some embodiment of the present invention, the decryption key used by the re-encryption server is derived by the re-encryption server from a master key of the loT device, preferably by using a unique identifier of the loT device. That is, the re-encryption server stores a master key of the loT device, the master key being used by the re-encryption server to individually derive its decryption key. Preferably, the derivation process is performed by using the loT device's unique identifier.

It should be noted that although only one loT device is mentioned in the forementioned preferred embodiments, the described steps are also applicable to a plurality of loT devices being connected to an application server. In this case, because of the master key, the re-encryption server does not need to store decryption keys corresponding to each loT device but only at least one several master key from which the respective decryption key is derived.

According to a second aspect of the present invention, there is provided a re-encryption server configured to enable secure transmission of data from an loT device to an application server via a telecommunication network, the re-encryption server comprising a cryptography means configured to decrypt data encrypted by the loT device and to re-encrypt the decrypted data by an encryption key of the application server in such a way that the application server can obtain the data by decrypting the re-encrypted data.

That is, upon receiving the encrypted data from the loT device, the cryptography means comprised in the re-encryption server is configured to firstly decrypt the encrypted data and then re-encrypt it by using an encryption key of the application server.

Preferably, the cryptography means is configured to generate a comparison CMAC code by means of a session key and to authenticate the data encrypted by the loT device if a reference CMAC code and the comparison CMAC code correspond to each other.

Preferably, the re-encryption server further comprises a storing means, preferably a hardware security module (HSM) configured to store cryptographic keys used by the re-encryption server in the course of a method described in the first aspect of the invention. The storing means stores all cryptographic keys used by the re-encryption server, particularly a master key, an encryption key of the application server and/or a session decryption key and/or a session encryption key. Those cryptographic keys are securely kept in the storing means regardless of the cryptographic operations conducted. As storing means, preferably, a hardware security module (HSM) is used, i.e. a physical computing device that safeguards and manages digital keys, performs cryptographic operations for encryption/decryption, signing and verifying, strong authentication and other cryptographic functions.

According to a third aspect of the present invention, there is provided a system configured for secure transmission of data from an loT device to an application server via a telecommunication network, comprising the loT device configured to encrypt the data, a re-encryption server according to any embodiment of the second aspect configured to re-encrypt the data encrypted by the loT device and the application server configured to decrypt data re-encrypted by the re-encryption server. Preferably, the system according to the third aspect or the re-encryption server according to any embodiment of the second aspect is configured to conduct a method according to any embodiment corresponding to the first aspect of the present invention.

It has to be noted that all the devices, elements, units and means described in the present application could be implemented in software or hardware elements or combination thereof. All steps which are performed by the various entities described in the present application as well as the described functionalities are intended to mean that the respective entity is adapted to or configured to perform the respective steps and functionalities.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
- FIG. 1: shows a schematic structural diagram of a system configured for secure trans-mission of data from an loT device to an application server according to the present invention; and
- FIG. 2: shows a flow chart of a method for securely transmitting data from an loT device to an application server according to the present invention;

### DETAILED DESCRIPTION

Detailed explanations of the present invention are given below with reference to attached drawings that illustrate specific embodiment examples of the present invention. These embodiments are described in sufficient detail to enable those skilled in the art to practice the invention. It is to be understood that the various embodiments of the present invention, although different, are not necessarily mutually exclusive.

For example, a particular feature, structure, or characteristic described herein in connection with one embodiment may be implemented within other embodiments without departing from the scope of the present invention. In addition, it is to be understood that the position or arrangement of individual elements within each disclosed embodiment may be modified without departing from the scope of the present invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

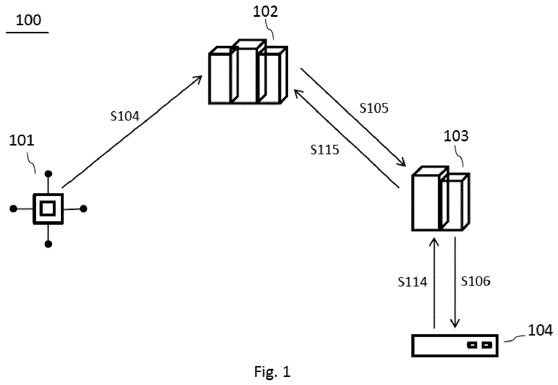

Fig. 1 shows a schematic structural diagram of a system 100 configured for secure transmission of data from an loT (Internet of Things) device to an application server. The system 100 comprises at least one loT device 101, an application server 102, a re-encryption server 103 and a HSM (hardware secure module) 104, the latter preferably being an internal component of the re-encryption server 103.

The loT device 101 is a physical object or a group of such objects that is embedded with sensors, computational capabilities, software and software execution capabilities and other technologies for connecting and exchanging data with other devices and systems over the Internet or other communications networks. For example, an loT device 101 according to the present invention is a vehicle, a smart watch, a smart phone, a product equipped with an electronic tag or the like.

The loT device 101 communicates with the application server 102 which is usually provided by a service provider offering a service that a user of the loT device 101 makes use of. The communication between the devices and servers is realized by a communication network, for example the Internet or a mobile telecommunication network. Encrypted data and a reference CMAC code is transmitted from an loT device 101 to the application server 102. Besides, other information comprising IMSI, CNT and/or KCV numbers and codes is also transmitted from the loT device 101 to the application server 102.

The re-encryption server 103 is usually a component external to the loT device 101 and the service provider and its application server 102. Usually, the re-encryption server 103 is operated by a trusted third party which provides communication security services to operators of loT devices 101 and service provides. The communication infrastructure between the various components is provided by a communication network such as the Internet or one or more mobile telecommunication networks. Preferably, the re-encryption server 103 provides an API as an interface, e.g. an HTTP API, to handle requests sent from the loT device 101 and/or the application server 102, such as re-encryption requests for the applications server 102.

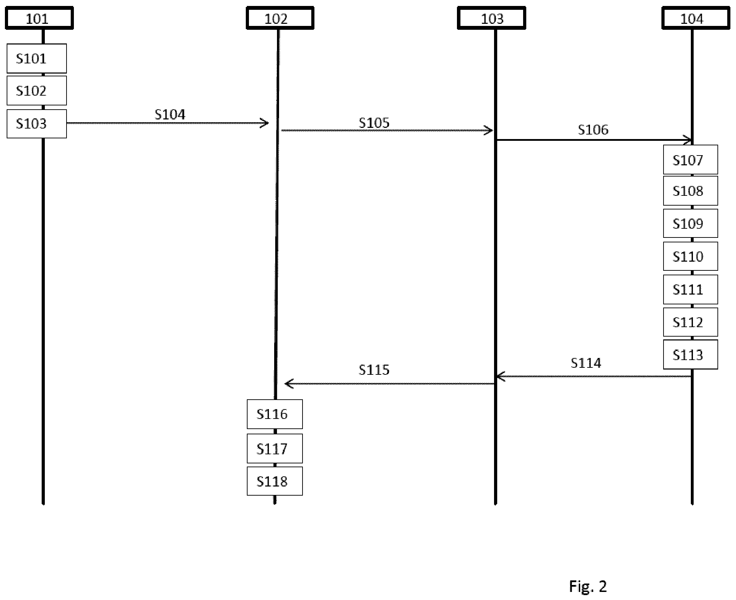

Instead of transmitting encrypted data from the loT device 101 directly to the application server 102 with the drawback that the application server 102 requires decryption keys that, if stolen in an attack, could corrupt the loT device's 101 communication, there exists two alternative options under utilization of the re-encryption server 103 as an intermediary: On the one hand, encrypted data only decryptable by the re-encryption server 103 can be sent (possibly together with a reference CMAC code) to the application server 103 and from there forwarded to the re-encryption server 102, as illustrated in Fig. 1 and 2. On the other hand, the encrypted data can be sent (possibly together with a reference CMAC code) directly from the loT device 101 to the re-encryption server (not illustrated).

The re-encryption server 103 utilizes an HSM module 104 as a storing means in which all cryptographic keys are securely stored that are required by the re-encryption server 103 to conduct the method sketched in Fig. 2. All cryptographic operations conducted by the re-encryption server 103 are performed while maintaining the cryptographic keys within the HSM 104.

FIG. 2 shows a flow chart of a method for securely transmitting data from an loT device to an application server according to the present invention.

In step S101, the loT device 101 derives an encryption session key from an encryption key according to an appropriate derivation algorithm.

In step S102, the loT device 101 encrypts data provided to or stored in the loT device 101 with the encryption session key derived in step S101.

In step S103, the loT device 201 generates a reference CMAC code by using the encryption session key generated in step S101 according to an appropriate CMAC generation algorithm.

In step S104, the loT device 101 transmits the encrypted data generated in step S102 and the reference CMAC code generated in step S103 to the application server 102.

In step S105, the application server 102 forwards the received encrypted data and reference CMAC code to the re-encryption server 103. The encrypted data is not and cannot be modified by the application server 102, since it does not have a corresponding session key to decrypt the encrypted data and authenticate the reference CMAC code.

In step S106, the re-encryption server 103 hands over the encrypted data and the reference CMAC code received from the application server 10 to the HSM 104, thereby maintaining all cryptographic keys within the HSM 104.

In step S107, the HSM 104 derives a decryption key corresponding to the encryption key used in step S101 from a master key stored in the HSM 104 according to a unique device identifier of the loT device 101.

In step S108, the HSM 104 derives a decryption session key corresponding to the encryption session key generated in step S101 from the decryption key generated in step S107 by using the same algorithm used in step S101.

In step S109, the HSM 104 generates a comparison CMAC code by using the decryption session key generated in step S108 according to the same algorithm used in step S103.

In step S110, the HSM 104 authenticates the encrypted data received from the application server 102 by comparing the reference CMAC code generated in step S103 and the comparison CMAC code generated in step S109. If these two CMAC codes correspond to each other, e.g. if they are identical or can be uniquely derived from each other, the authenticity and integrity of the encrypted data received from the loT device 201 HSM 104 is determined.

In step S111, after authentication in step S110, the HSM 104 decrypts the encrypted data from the loT device 101 by using the decryption session key generated in step S108, thereby obtaining the clear text data.

In step S112, the HSM 104 re-encrypts the data obtained in step S111 by using an encryption key of the application server 102, the encryption key of the application server 102 being different from the encryption key used in step S101.

In step S113, the HSM 104 generates a reference CMAC code by using the encryption key of the application server 102 used in step S112 according to an appropriate CMAC algorithm, that reference CMAC code being different from the reference CMAC code generated in step S103.

In step S114, the HSM 104 hands over the re-encrypted data produced in step S112 and the reference CMAC code generated in step S113 to the re-encryption server 103. Since the HSM 104 is a module of the re-encryption server 103, this steps actually relates to an internal data communication within the re-encrypted data, from inside of the HSM 104 to outside of the HSM 104.

In step S115, the re-encryption server 103 transmits the re-encrypted data and the reference CMAC code to the application server 102.

In step S116, the application server 102 generates a comparison CMAC code, upon or before receiving the re-encrypted data and the reference CMAC code from the re-encryption server 103, by using a decryption key of the application server 102 which corresponds to the encryption key of the application server 102 used in step S112.

In step S117, the application server 102 authenticates the re-encrypted data received from the re-encryption server 103 by comparing the reference CMAC code generated in step S113 and the comparison CMAC code generated in step S116. If these two CMAC codes correspond to each other, e.g. if they are identical or can be uniquely derived from each other, the authenticity and integrity of the re-encrypted data received from the re-encryption server 103 is determined.

In step S118, after authentication in step S117, the application server 102 decrypts the re-encrypted data from the re-encryption server 103 by using the decryption key of the application server 102 used in step S116, thereby obtaining the clear text data from the loT device 101.

The methods as described through the embodiment above, allow that the decryption key corresponding to the encryption key used in the loT device does not need to be stored in the application server any more. In this case, even if the application server is hacked by a hacker, the hacker does not obtain access to the decryption key. An efficient solution is thus provided for improving the security of the communication between the loT device and the application server.

In the foregoing specification, the invention has been described with reference to specific embodiments thereof. It will, however, be evident that various modifications and changes may be made thereto without departing from the broader scope of the invention. For example, the above-described process flows are described with reference to a particular ordering of process actions. However, the ordering of many of the described process actions may be changed without affecting the scope or operation of the invention. The specification and drawings are, accordingly, to be regarded in an illustrative rather than restrictive sense.

## Claims

1. A method for securely transmitting data from an loT device (101) to an application server (102) via a telecommunication network, **characterized in that** a re-encryption server (103)
- decrypts (S111) data encrypted by the loT device (101); and
- re-encrypts (S112) the decrypted data by an encryption key of the application server (102) in such a way that the application server (102) can obtain the data by decrypting the re-encrypted data.

2. The method according to claim 1, wherein
- the loT device (101) encrypts (S102) the data by an encryption session key corresponding to a decryption session key used by the re-encryption server to decrypt the data;
- the application server (103) decrypts (S118) the data re-encrypted by the re-encryption server (102) with a decryption key corresponding to the encryption key used by the re-encryption server (102) to re-encrypt the data, thereby obtaining the data from the loT device.

3. The method according to claim 2, wherein the loT device (101) generates (S103) a reference code by means of the encryption session key and the re-encryption server (103) generates (S109) a comparison code by means of the decryption session key.

4. The method according to claim 3, wherein the re-encryption server (103) authenticates (S110) the data encrypted by the loT device (101) if the reference code and the comparison code correspond to each other.

5. The method according to any one of claims 2 to 4, wherein
the encryption session key is derived (S101) from an encryption key used by the loT device (101) and/or
the decryption session key is derived (S108) from an decryption key used by the re-encryption server (103).

6. The method according to claim 1, wherein
- the loT device (101) encrypts the data by an encryption key corresponding to a decryption key used by the re-encryption server (103) to decrypt the data;
- the application server (102) decrypts the data re-encrypted by the re-encryption server (103) with an decryption key corresponding to the encryption key used by the re-encryption server (103) to re-encrypt the data, thereby obtaining the data from the loT device (101).

7. The method according to any one of claims 2 to 6, wherein
the application server (102) generates (S116) a comparison code by means of the decryption key used by the application server (102) to decrypt the re-encrypted data; and
the re-encryption server (103) generates (S113) a reference code by means of the encryption key used by the re-encryption server (103) to re-encrypt the data.

8. The method according to claim 7, wherein the application server (102) authenticates (S117) the data re-encrypted by the re-encryption server (S103), if the reference code and the comparison code correspond to each other.

9. The method according to any one of claims 3, 4, 7 or 8, wherein the reference code is a CMAC code and/or the comparison code is a CMAC code.

10. The method according to claim 5 or claim 6, wherein the decryption key used by the re-encryption server (103) is derived (S107) by the re-encryption server (103) from a master key of the loT device (101), preferably by using an loT device identifier.

11. A re-encryption server (103) configured to enable secure transmission of data from an loT device (101) to an application server (102) via a telecommunication network, the re-encryption server (103) comprising a cryptography means configured to decrypt (S111) data encrypted by the loT device (101) and to re-encrypt (S112) the decrypted data by an encryption key of the application server (102) in such a way that the application server (102) can obtain the data by decrypting the re-encrypted data.

12. The re-encryption server (103) according to claim 11, wherein the cryptography means is configured to generate (S109) a comparison CMAC code by means of a session key and to authenticate (S110) the data encrypted by the loT device (101) if a reference CMAC code and the comparison CMAC code correspond to each other.

13. The re-encryption server (103) according to claim 11 or 12, further comprising a storing means, preferably a hardware security module (HSM) (104) configured to store cryptographic keys used by the re-encryption server (103) in the course of a method according to any one of claims 1 to 10 being conducted.

14. A system (100) configured for secure transmission of data from an loT device (101) to an application server (102) via a telecommunication network, comprising:
- the loT device (101) configured to encrypt the data;
- a re-encryption server (103) according to any one of claims 11 to 13 configured to re-encrypt the data encrypted by the loT device (101); and
- the application server (102) configured to decrypt data re-encrypted by the re-encryption server (103).

15. The system (100) according to claims 14 or a re-encryption server (103) according to any one of claims 11 to 13 being configured to conduct a method according to any one of claims 1 to 10.
